# EUROPÄISCHE PATENTANMELDUNG

(11) **EP 4 699 972 A1**
(43) Veröffentlichungstag der Anmeldung: **25.02.2026**
(21) Anmeldenummer: 25193559.9
(22) Anmeldetag: 01.08.2025
(51) Int. Cl.: B66C 1/02, F16K 1/44, F16K 39/02

(54) **SCHLAUCHHEBER MIT BELÜFTUNGSVENTIL**

(30) Priorität: 19.08.2024 DE 102024123584
(71) Anmelder: J. Schmalz GmbH, 72293 Glatten (DE)
(72) Erfinder: Burt, Hans, 72160 Horb a.N. (DE); Marchel, Alex, 72280 Dornstetten (DE)
(74) Vertreter: DREISS Patentanwälte PartG mbB

(57) **Zusammenfassung**

Die Erfindung betrifft ein Belüftungsventil (10) für einen Schlauchheber, sowie einen Schlauchheber (100) umfassend ein solches Belüftungsventil (10) und eine Bedienvorrichtung (108) für einen Schlauchheber (100) umfassend ein solches Belüftungsventil (10).

## Beschreibung

Die Erfindung betrifft Belüftungsventil für einen Schlauchheber, einen Schlauchheber mit einem solchen Belüftungsventil sowie eine Bedienvorrichtung für einen Schlauchheber mit einem solchen Belüftungsventil.

Schlauchheber sind Unterdruck-Handhabungsvorrichtungen mit welchen Lasten mit Hilfe von Unterdruck angehoben, gegebenenfalls verlagert und wieder abgesetzt werden können. Die Hubkraft wird mittels eines Hubschlauchs ausgeübt, der durch Beaufschlagung seines Schlauchinnenraums mit Unterdruck verkürzbar und durch Abbau des in ihm herrschenden Unterdrucks wieder verlängerbar ist. An einem Ende des Hubschlauchs ist üblicherweise ein Endeffektor zum Greifen eines Gegenstands angeordnet. Hierbei kann es sich um eine mechanische Greifvorrichtung handeln, insbesondere aber um eine Sauggreifvorrichtung.

Um den Hubschlauch und/oder den Endeffektor zu bedienen, ist zwischen Hubschlauch und Endeffektor üblicherweise eine Bedienvorrichtung vorgesehen, welche einen Bediengriff zum Verlagern des Hubschlauchs aufweist. In der Bedienvorrichtung ist in der Regel ein Belüftungsventil integriert, mittels dessen der Schlauchinnenraum des Hubschlauchs bei Bedarf belüftet und somit in seiner Länge verändert werden kann. Zum Öffnen des Belüftungsventils ist üblicherweise ein Schalter oder Taster an der Bedienvorrichtung vorgesehen.

Die DE 10 2008 028 205 C5 zeigt eine solche Bedienvorrichtung für Schlauchheber mit einem Handgriff, welcher einen manuell betätigbaren Abzug aufweist. Der Abzug steuert ein Belüftungsventil an, durch welches ein Zustrom von Umgebungsluft in den Hubschlauch gesteuert wird. Im Konkreten wird bei Betätigung des Abzugs dem Hubschlauch Luft aus der Umgebung des Hubschlauchs zugeführt, wodurch sich der Druck im Schlauchinnenraum erhöht und der Hubschlauch sich in Folge verlängern kann, ggf. unter Wirkung der Schwerkraft. Wird der Abzug losgelassen, schließt das Belüftungsventil wieder, sodass ein Zustrom von Umgebungsluft in den Hubschlauch unterbrochen wird, in Folge dessen sich der Hubschlauch automatisch wieder in Richtung seiner Endlage zusammenzieht.

Dieses automatische Verfahren in die Endlage ist jedoch nicht immer erwünscht. Stattdessen kann es vorteilhaft sein, wenn der Schlauchheber nicht in die Endlage verfährt, sondern in einer voreingestellten Schwebehöhe verbleibt, bspw. um die Bedienvorrichtung zur Vorbereitung eines nächsten Transportvorgangs eines Werkstücks aus dieser Arbeitshöhe heraus ergreifen zu können.

Zu diesem Zweck ist es bekannt, an der Bedienvorrichtung einen separaten Rasthebel vorzusehen, welcher den Abzug in einer definierten Schaltstellung arretiert und somit einen definierten Zustrom von Umgebungsluft ermöglicht.

Beispielsweise ist aus der DE 10 2020 128 380 A1 eine Bedienvorrichtung mit Bediengriff bekannt, wobei an einer ersten Seite des Bediengriffs ein Taster zum Öffnen eines Belüftungsventils vorgesehen ist. Das Belüftungsventil ist mittels eines Kraftspeichers in eine Schließstellung beaufschlagt, sodass das Belüftungsventil nach Loslassen des Tasters in die Schließstellung überführt wird und somit der Taster wieder seine Ausgangsstellung einnimmt. Um das Belüftungsventil in einer Zwischenstellung zwischen Schließstellung und Offenstellung zu arretierten, ist ein Verriegelungsmechanismus vorgesehen, welcher über einen an der gegenüberliegenden Seite des Bediengriffs angeordneten Entriegelungstaster lösbar ist.

Um eine Bedienung eines Schlauchhebers noch intuitiver zu gestalten, ist es aus der DE 10 2023 102 438 B3 bekannt, zwei Bedienelemente vorzusehen, wobei bei Betätigung des ersten Bedienelements das Belüftungsventil geöffnet wird und bei Betätigung des zweiten Bedienelements das Belüftungsventil geschlossen wird. Das Belüftungsventil ist hierbei als Ventilklappe ausgebildet, an welcher die Bedienelemente über ein jeweiliges Übertragungselement in Form einer Verbindungsstange unmittelbar angreifen. Die Ventilklappe ist vorzugsweise zentrisch gelagert, sodass auch bei einseitig anliegendem Unterdruck keine Bewegungskraft auf die Ventilklappe ausgeübt wird, was das Risiko einer ungewollten Betätigung der Ventilklappe reduziert und somit eine Schwebesteuerung ermöglicht.

Der Erfindung liegt die Aufgabe zugrunde, auf konstruktiv einfach Weise eine Belüftung eines Schlauchhebers zu verbessern. Insbesondere soll ein Schwebezustand auf einfache Weise einstellbar sein.

Diese Aufgabe wird erfindungsgemäß durch ein Belüftungsventil mit den Merkmalen des Anspruchs 1, einen Schlauchheber mit den Merkmalen des Anspruchs 12 und eine Bedienvorrichtung mit den Merkmalen des Anspruchs 16 gelöst.

Gemäß einem ersten Aspekt wird ein Belüftungsventil vorgeschlagen. Das Belüftungsventil ist insbesondere zum Belüften eines Hubschlauchs eines Schlauchhebers geeignet. Das Belüftungsventil weist eine Unterdruckseite und eine Belüftungsseite, insbesondere Überdruckseite, auf. Bei Einsatz in einem Schlauchheber ist die Unterdruckseite insbesondere mit einem Schlauchinnenraum eines Hubschlauchs des Schlauchhebers strömungsverbunden. Die Belüftungsseite ist insbesondere mit der Atmosphäre strömungsverbunden. Das Belüftungsventil umfasst außerdem einen, insbesondere zwischen Unterdruckseite und Belüftungsseite angeordneten, Ventilmechanismus zum Freigeben und Absperren einer Strömungsverbindung zwischen der Unterdruckseite und der Belüftungsseite. Der Ventilmechanismus weist eine erste Ventilkörpereinrichtung und eine zweite Ventilkörpereinrichtung auf. Vorzugsweise umfasst die erste Ventilkörpereinrichtung wenigstens einen ersten Ventilkörper, bspw. Ventilkolben. Vorzugsweise umfasst die zweite Ventilkörpereinrichtung wenigstens einen zweiten Ventilkörper, bspw. Ventilkolben. Die erste Ventilkörpereinrichtung, insbesondere der wenigstens eine erste Ventilkörper, ist in einer ersten Schaltrichtung, insbesondere linear, ausgehend von einer Schließstellung in eine Offenstellung verstellbar. Die zweite Ventilkörpereinrichtung, insbesondere der wenigstens eine zweite Ventilkörper, ist in einer zweiten Schaltrichtung, insbesondere linear, ausgehend von einer Schließstellung in eine Offenstellung verstellbar. Die Ventilkörpereinrichtungen sind miteinander derart bewegungsgekoppelt, dass bei einer Bewegung der ersten Ventilkörpereinrichtung in der ersten Schaltrichtung (d.h. in Richtung Offenstellung) die zweite Ventilkörpereinrichtung in der zweiten Schaltrichtung (d.h. in Richtung Offenstellung) bewegt wird und umgekehrt.

Vorzugsweise ist der Ventilmechanismus, insbesondere die Ventilkörpereinrichtungen, derart ausgebildet, dass, bei Vorliegen eines Druckunterschieds zwischen der Unterdruckseite und der Belüftungsseite, zumindest in der Schließstellung auf die erste Ventilkörpereinrichtung eine in der ersten Schaltrichtung wirkende erste Kraft ausgeübt wird und auf die zweite Ventilkörpereinrichtung eine entgegen der zweiten Schaltrichtung wirkende zweite Kraft ausgeübt wird. Vorzugsweise ist der Ventilmechanismus, insbesondere die Ventilkörpereinrichtungen, derart ausgebildet, dass die erste Kraft und die zweite Kraft sich betragsmäßig um maximal 10%, vorzugsweise maximal 5%, weiter vorzugsweise maximal 1%, voneinander unterscheiden.

Vorzugsweise weisen die Ventilkörpereinrichtungen, insbesondere die Ventilkörper, jeweils erste Wirkflächenabschnitte auf, durch Beaufschlagen derer mit Druck eine Kraft auf die jeweilige Ventilkörpereinrichtung in der jeweiligen Schaltrichtung ausgeübt wird und jeweils zweite Wirkflächenabschnitte, durch Beaufschlagen derer mit Druck eine Kraft auf die jeweilige Ventilkörpereinrichtung entgegen der jeweiligen Schaltrichtung ausgeübt wird. Die Ventilkörpereinrichtungen, insbesondere die Ventilkörper, sind dann vorzugsweise derart bemessen, dass sich eine Differenz aus der Summe aller ersten Wirkflächenabschnitte der ersten Ventilkörpereinrichtung, insbesondere des wenigstens einen ersten Ventilkörpers, und der Summe aller zweiten Wirkflächenabschnitte der ersten Ventilkörpereinrichtung, , insbesondere des wenigstens einen ersten Ventilkörpers, von einer der Differenz aus der Summe aller ersten Wirkflächenabschnitte der zweiten Ventilkörpereinrichtung, insbesondere des wenigstens einen zweiten Ventilkörpers, und der Summe aller zweiten Wirkflächenabschnitte der zweiten Ventilkörpereinrichtung, insbesondere des wenigstens einen zweiten Ventilkörpers, betragsmäßig um maximal 10%, vorzugsweise maximal 5%, weiter vorzugsweise maximal 1%, unterscheidet. Vorzugsweise sind die Differenzen identisch.

Vorzugsweise ist der Ventilmechanismus derart ausgebildet, insbesondere die Ventilkörpereinrichtungen derart bemessen, dass, bei Vorliegen eines Druckunterschieds zwischen der Unterdruckseite und der Belüftungsseite, die erste Ventilkörpereinrichtung in erster Schaltrichtung und die zweite Ventilkörpereinrichtung entgegen der zweiten Schaltrichtung derart beaufschlagt werden, dass die Ventilkörpereinrichtungen in Folge der Bewegungskopplung in ihrer momentanen Position verbleiben.

Ein solches Belüftungsventil weist insofern einen zumindest im Wesentlichen druckausgeglichenen Ventilmechanismus auf, was einerseits eine einfache, insbesondere kraftsparende, Betätigung des Belüftungsventils begünstigt und andererseits ein selbsttätiges Verstellen des Ventilmechanismus aufgrund eines Druckunterschieds zwischen Unterdruckseite und Belüftungsseite verhindert. Dies ermöglicht es, bei einem Einsatz des Belüftungsventils in einem Schlauchheber auf konstruktiv einfache und kompakte Weise einen Schwebezustand zu realisieren.

In der Schließstellung liegen die Ventilkörpereinrichtungen insbesondere an einem jeweiligen Ventilsitz an. In der Offenstellung sind die Ventilkörpereinrichtungen insbesondere von einem jeweiligen Ventilsitz abgehoben. Vorzugsweise verschließen die Ventilkörpereinrichtungen in der Schließstellung jeweils eine Strömungsöffnung zwischen Belüftungsseite und Unterdruckseite, und in der Offenstellung ist diese Strömungsöffnung zumindest abschnittsweise geöffnet.

Vorzugsweise umfasst das Belüftungsventil ein Ventilgehäuse. Der Ventilmechanismus, insbesondere die erste und/oder die zweite Ventilkörpereinrichtung, können dann in dem Ventilgehäuse angeordnet sein. Das Ventilgehäuse kann eine die Unterdruckseite bildende Unterdruckkammer und eine die Belüftungsseite bildende Belüftungskammer aufweisen. Die Unterdruckkammer kann bei einem Einbau in einem Schlauchheber mit einem Schlauchinnenraum des Hubschlauchs des Schlauchhebers strömungsverbunden sein. Die Belüftungskammer kann mit einem Belüftungsanschluss des Schlauchhebers strömungsverbunden sein.

Die Ventilkörper können unterschiedlich ausgebildet sein. Insbesondere können die Ventilkörper als Ventilkolben ausgebildet sein. Eine solche Ausgestaltung ermöglicht einen besonders kompakten Aufbau. Zudem ist bspw. gegenüber Lösungen mit Ventilklappe eine Abdichtung erleichtert.

Die Ventilkörper, insbesondere Ventilkolben, können unterschiedliche Querschnittsformen aufweisen. Die Ventilkörper, insbesondere Ventilkolben, können rotationssymmetrisch ausgebildet sein. Beispielsweise können die Ventilkörper einen kreisrunden Querschnitt aufweisen. Die Ventilkörper können auch einen eckigen Querschnitt aufweisen.

Die Ventilkörper können ein oder mehrere Dichtelemente aufweisen, bspw. in Form von Dichtungsringen. Es ist auch denkbar, dass das Dichtelement an einem jeweiligen Ventilsitz angeordnet ist, mit welchem der Ventilkörper in der Schließstellung zusammenwirkt.

Die die erste Ventilkörpereinrichtung und die zweite Ventilkörpereinrichtung können zueinander identisch ausgebildet sein. Die erste Ventilkörpereinrichtung und die zweite Ventilkörpereinrichtung können auch unterschiedlich ausgebildet sein.

Es ist denkbar, dass die erste Ventilkörpereinrichtung und die zweite Ventilkörpereinrichtung jeweils nur einen Ventilkörper, insbesondere Ventilkolben, umfassen.

Es ist auch denkbar, dass die erste Ventilkörpereinrichtung und/oder die zweite Ventilkörpereinrichtung mehr als einen Ventilkörper aufweist.

Die Ventilkörpereinrichtungen können die gleiche Anzahl an Ventilkörpern aufweisen, bspw. jede Ventilkörpereinrichtung zwei Ventilkörper. Die Ventilkörpereinrichtungen können auch eine unterschiedliche Anzahl an Ventilkörpern aufweisen. Beispielsweise ist es denkbar, dass eine der Ventilkörpereinrichtungen nur einen Ventilkörper aufweist und die andere Ventilkörpereinrichtung mehr als einen Ventilkörper aufweist.

Vorzugsweise ist jeder Ventilkörpereinrichtung, insbesondere jedem Ventilkörper, wenigstens eine eigene Strömungsöffnung zwischen Unterdruckseite und der Belüftungsseite zugeordnet. Vorzugsweise wirken dann die Ventilkörpereinrichtungen, insbesondere die Ventilkörper, in der jeweiligen Schließstellung mit einem jeweiligen Ventilsitz zusammen, um die wenigstens eine ihnen zugeordnete Strömungsöffnung dichtend zu verschließen. Insofern kann die erste Ventilkörpereinrichtung in der Schließstellung mit einem ersten Ventilsitz zusammenwirken, um eine erste Strömungsöffnung zwischen Belüftungsseite und Unterdruckseite zu verschließen, und die zweite Ventilkörpereinrichtung kann in der Schließstellung mit einem zweiten Ventilsitz zusammenwirken, um eine zweite Strömungsöffnung zwischen Belüftungsseite und Unterdruckseite zu verschließen.

Als besonders vorteilhaft erweist es sich, wenn sich die Ventilkörpereinrichtungen, insbesondere die Ventilkörper, in die ihnen jeweils zugeordnete wenigstens eine Strömungsöffnung entlang der Schaltrichtung hinein erstrecken, sodass zumindest in einer geöffneten Stellung [d.h. eine Stellung zwischen Schließstellung und Offenstellung] ein Belüftungsspalt zwischen der jeweiligen Ventilkörpereinrichtung, insbesondere dem Ventilkörper, und einer die Strömungsöffnung begrenzenden Wandung gebildet ist. Insofern können die Ventilkörpereinrichtungen zumindest abschnittsweise in einer jeweiligen Strömungsöffnung zwischen Belüftungsseite und Unterdruckseite angeordnet sein, sodass zumindest in einer geöffneten Stellung ein Belüftungsspalt zwischen der Ventilkörpereinrichtung, insbesondere dem Ventilkörper, und einer die Strömungsöffnung begrenzenden Wandung gebildet ist.

Im Rahmen einer vorteilhaften Realisierungsform sind die Unterdruckseite und die Belüftungsseite durch eine Wandung, insbesondere des Ventilgehäuses, voneinander getrennt. Bei einer Ausgestaltung mit Ventilgehäuse kann die Wandung einen Ventilinnenraum des Ventilgehäuses in die Unterdruckseite, insbesondere in die Unterdruckkammer, und die Belüftungsseite, insbesondere in die Belüftungskammer, unterteilen.

Vorzugsweise ist in der Wandung wenigstens eine erste Strömungsöffnung ausgebildet, durch welche sich die erste Ventilkörpereinrichtung, insbesondere der wenigstens eine erste Ventilkörper, erstreckt, und wenigstens eine zweite Strömungsöffnung, durch welche sich die zweite Ventilkörpereinrichtung, insbesondere der wenigstens eine zweite Ventilkörper, erstreckt. Die Strömungsöffnungen sind vorzugsweise als Aussparungen in der Wandung ausgebildet. Die Wandung, insbesondere ein die jeweilige Strömungsöffnung umgebender Wandungsabschnitt, kann dann einen Ventilsitz für die Ventilkörpereinrichtungen, insbesondere die Ventilkörper, bilden.

Insbesondere können zwischen der Wandung und den Ventilkörpereinrichtung jeweils eine Dichteinrichtung, bspw. in Form eines O-Rings oder eines Dichtstreifend, angeordnet sein. Die Dichteinrichtung kann an der Ventilkörpereinrichtung angeordnet sein und somit als Teil der Ventilkörpereinrichtung mit verlagerbar sein. Die Dichteinrichtung kann auch ortsfest an der Wandung angeordnet sein.

Die Ventilkörpereinrichtungen sind vorzugsweise an gegenüberliegenden Seiten der Wandung angeordnet. Insbesondere ist die erste Ventilkörpereinrichtung auf der Unterdruckseite der Wandung angeordnet und die zweite Ventilkörpereinrichtung ist auf der Belüftungsseite der Wandung angeordnet.

Vorzugsweise erstrecken sich die Ventilkörpereinrichtungen, insbesondere die Ventilkörper, von gegenüberliegenden Seiten durch die Strömungsöffnungen. Vorzugsweise sind die Ventilkörpereinrichtungen derart ausgebildet sind, dass die Wandung einen Anschlag für die Ventilkörpereinrichtungen in der jeweiligen Schließstellung bildet, d.h. einen Bewegungsweg der Ventilkörpereinrichtung in einer Richtung entgegen der Schaltrichtung begrenzt. Dies verhindert, dass die Ventilkörpereinrichtungen auf die gegenüberliegende Seite der Wandung durchrutschen können.

Im Rahmen einer besonders vorteilhaften Weiterbildung können die Ventilkörpereinrichtungen derart ausgebildet sein, insbesondere die Ventilkörper derart geformt sein, weiter insbesondere sich die Ventilkörper in einer Richtung entgegen der jeweiligen Schaltrichtung derart radial verjüngen, dass sich bei einer jeweiligen Verstellbewegung der Ventilkörpereinrichtungen, insbesondere der Ventilkörper, in Schaltrichtung, ein Strömungsquerschnitt für Strömungen von der Belüftungsseite zu der Unterdruckseite, insbesondere die Größe eines zwischen Ventilkörpereinrichtung und Ventilsitz gebildeten Belüftungsspalts, nicht-linear verändert, insbesondere progressiv zunimmt (d.h. mit steigendem Öffnungsgrad eine Zunahme des Strömungsquerschnitt je Einheitshub entlang der Schaltrichtung zunimmt). Eine solche Ausgestaltung ermöglicht eine besonders präzise Steuerung. Bei einem Einsatz des Belüftungsventils in einem Schlauchheber kann somit eine besonders intuitive und sichere Bedienung erzielt werden.

Eine solche nicht-lineare Öffnung kann beispielsweise dadurch realisiert sein, dass sich die Ventilkörper in einer Richtung entgegen der Schaltrichtung, insbesondere trichterförmig oder kelchförmig, radial verjüngen.

Weiter kann es sich als vorteilhaft erweisen, wenn sich die Ventilkörper in Schaltrichtung radial, insbesondere linear, verjüngen. Auf diese Weise kann ein besonders vorteilhafter Strömungsfluss erzielt werden, um eine Kraftwirkung eines Volumenstroms auf den Ventilkörper zu minimieren.

Bei einer ersten vorteilhaften Realisierungsform des Belüftungsventils gemäß dem ersten Aspekt können die erste Schaltrichtung und die zweite Schaltrichtung entgegensetzt orientiert sein. Insofern können sich die Ventilkörpereinrichtungen, insbesondere die Ventilkörper, in entgegensetzte Richtungen ausgehend von einer Offenstellung in Richtungen Schließstellung bewegen. Die Ventilkörpereinrichtungen können sich insofern gegenläufig bewegen.

Die erste und die zweite Ventilkörpereinrichtung sind dann insbesondere derart ausgebildet und miteinander bewegungsgekoppelt, dass sie sich relativ zueinander bewegen können.

Die Ventilkörpereinrichtungen können auf unterschiedliche Weise miteinander bewegungsgekoppelt sein. Beispielsweise könnten die Ventilkörpereinrichtungen hydraulisch miteinander bewegungsgekoppelt sein. Vorzugsweise sind die Ventilkörpereinrichtungen mechanisch miteinander bewegungsgekoppelt.

In vorteilhafter Weise können die erste Ventilkörpereinrichtung und die zweite Ventilkörpereinrichtung über ein drehbar gelagertes Kopplungselement miteinander bewegungsgekoppelt sein, insbesondere in der Art einer Wippe. Das Kopplungselement kann beispielsweise als Kopplungsstange ausgebildet sein. Eine Drehachse des Kopplungselements ist dabei vorzugsweise zwischen der ersten und der zweiten Ventilkörpereinrichtung angeordnet.

Das Kopplungselement weist insbesondere einen ersten Kopplungsabschnitt zur Verbindung mit der ersten Ventilkörpereinrichtung und einen zweiten Kopplungsabschnitt zur Verbindung mit der zweiten Ventilkörpereinrichtung auf. Der erste und/oder das zweite Kopplungsabschnitt können als Langloch ausgebildet sein. Der erste und/oder das zweite Kopplungsabschnitt können auch als Stifte ausgebildet sein, welche in ein entsprechendes Langloch an der ersten oder zweiten Ventilkörpereinrichtung eingreift. Weiter kann es sich als vorteilhaft erweisen, wenn eines der beiden Kopplungsabschnitte als Gabel ausgeführt ist. Auf diese Weise wird eine besonders einfache Montage begünstigt.

Im Zusammenhang mit der ersten Realisierungsform erweist es sich zudem als vorteilhaft, wenn die erste und die zweite Schaltrichtung parallel zu einer Hauptströmungsrichtung von der Belüftungsseite zu der Unterdruckseite angeordnet sind.

Im Rahmen einer vorteilhaften Weiterbildung der ersten Realisierungsform kann der Ventilmechanismus derart ausgebildet sein, insbesondere eine geometrische Anordnung der Ventilkörper und des Kopplungselements derart ausgeführt sein, dass bei Überführung der Ventilkörpereinrichtungen in die Schließstellung eine der Ventilkörpereinrichtungen ihre Schließstellung erreicht, bevor die andere Ventilkörpereinrichtung ihre Schließstellung erreicht. Insofern kann der Ventilmechanismus derart ausgebildet sein, insbesondere eine geometrische Anordnung der Ventilkörper und des Kopplungselements derart ausgeführt sein, dass die Ventilkörpereinrichtungen nacheinander schließen, d.h. nacheinander in ihre jeweilige Schließstellung überführt werden. Insbesondere kann die Ventilkörpereinrichtung zuerst die Schließstellung erreichen, deren Schaltrichtung von der Belüftungsseite zu der Unterdruckseite weist. Auf diese Weise kann ein auf der Unterdruckseite vorherrschender Unterdruck die Ventilkörpereinrichtungen zuziehen, was einen Ausgleich von konstruktivem Spiel begünstigt.

Bei einer zweiten Realisierungsform des Belüftungsventils gemäß dem ersten Aspekt können die erste Schaltrichtung und die zweite Schaltrichtung zueinander parallel orientiert oder identisch sein.

Beispielsweise können die erste Ventilkörpereinrichtung, insbesondere der wenigstens eine erste Ventilkörper, und die zweite Ventilkörpereinrichtung, insbesondere der wenigstens eine zweite Ventilkörper, über ein Verbindungselement miteinander starr verbunden sein.

Es ist auch denkbar, dass die erste Ventilkörpereinrichtung, insbesondere der wenigstens eine erste Ventilkörper, und die zweite Ventilkörpereinrichtung, insbesondere der wenigstens eine zweite Ventilkörper, durch unterschiedliche Abschnitte eines gemeinsamen Ventilkörpers gebildet sind.

Bei der zweiten Realisierungsform hat es sich als vorteilhaft erwiesen, wenn die Schaltrichtungen geneigt, insbesondere orthogonal, zu einer Hauptströmungsrichtung von der Belüftungsseite zu der Unterdruckseite angeordnet sind. Bei einem Einsatz in einem Schlauchheber ist das Belüftungsventil vorzugsweise derart angeordnet, dass die Schaltrichtungen orthogonal zu einer Wirkrichtung der Schwerkraft / horizontal angeordnet sind. Auf diese Weise wird vermieden, dass die Schwerkraft entlang den Schaltrichtungen wird und sich das Belüftungsventil selbsttätig verstellt.

Gemäß einem zweiten Aspekt wird ein Belüftungsventil, insbesondere für einen Schlauchheber, vorgeschlagen, umfassend:
- eine, insbesondere mit der Atmosphäre verbundene, Belüftungsöffnung und eine Unterdrucköffnung
- einen Ventilmechanismus zum Freigeben und Absperren einer Strömungsverbindung zwischen der Belüftungsöffnung und der Unterdrucköffnung, umfassend einen um eine Drehachse drehbar gelagerten Ventilkörper, insbesondere in Form einer Trommel,
wobei der Ventilkörper wenigstens eine radiale Durchgangsöffnung aufweist, wobei der Ventilkörper in einem Strömungsweg zwischen der Belüftungsöffnung und Unterdrucköffnung derart angeordnet ist, dass der Ventilkörper in einer ersten Drehlage um die Drehachse eine Schließstellung einnimmt, in welcher eine Strömungsverbindung zwischen der Belüftungsöffnung und der Unterdrucköffnung durch den Ventilkörper unterbrochen ist, und dass der Ventilkörper in einer von der ersten Drehlage verschiedenen zweiten Drehlage eine Offenstellung einnimmt, in welcher die Strömungsverbindung zwischen der Belüftungsöffnung und der Unterdrucköffnung durch die wenigstens eine Durchgangsöffnung hindurch hergestellt ist.

Eine solche Ausgestaltung eines Belüftungsventils hat sich als besonders robust herausgestellt. Insbesondere kann bei einer Anordnung der Drehachse geneigt oder orthogonal zu einer Hauptströmungsrichtung von der Belüftungsöffnung zu der Unterdrucköffnung ein Verstellen des Ventilkörpers allein durch die Strömungskraft verhindert werden. Bei einem Einsatz in einem Schlauchheber kann auf diese Weise bspw. ein Schwebezustand des Schlauchhebers auf einfache Weise und insbesondere ohne zusätzlichen Rastmechanismus realisiert werden.

Im Rahmen einer vorteilhaften Realisierungsform kann das Belüftungsventil gemäß dem zweiten Aspekt ein, insbesondere scheibenförmiges, Ventilgehäuse aufweisen, welches einen Ventilinnenraum begrenzt. Der Ventilinnenraum weist vorzugsweise wenigstens eine erste Öffnung, insbesondere erste Gehäuseöffnung des Ventilgehäuses, welche die Unterdrucköffnung bildet, und wenigstens eine zweite Öffnung, insbesondere wenigstens eine zweite Gehäuseöffnung des Ventilgehäuses, auf, welche die Unterdrucköffnung bildet.

Vorzugsweise überlappt die wenigstens eine Durchgangsöffnung des Ventilkörpers in der zweiten Drehlage sowohl mit der wenigstens einen ersten Öffnung als auch mit der wenigstens einen zweiten Öffnung zumindest abschnittsweise. Insbesondere fluchtet die wenigstens einen Durchgangsöffnung in dem Ventilkörper mit der wenigstens einen ersten Öffnung und der wenigstens einen zweiten Öffnung in der zweiten Drehlage.

Die vorstehend beschriebenen Belüftungsventile gemäß dem ersten und dem zweiten Aspekt sind generell für Unterdruckanwendungen einsetzbar, bspw. zur Belüftung eines Sauggreifers oder einer Unterdruckerzeugungseinrichtung. Ein besonders vorteilhaftes Anwendungsgebiet ist jedoch das Gebiet der Schlauchheber.

Insofern betrifft die Erfindung auch einen Schlauchheber, umfassend einen Hubschlauch mit einem Schlauchinnenraum und ein Belüftungsventil zum Belüften des Schlauchinnenraums. Der Hubschlauch ist durch Beaufschlagung des Schlauchinnenraums mit Unterdruck verkürzbar und durch Belüften des Schlauchinnenraums wieder verlängerbar.

Das Belüftungsventil kann gemäß dem ersten Aspekt ausgebildet sein. Insofern wird gemäß einem dritten Aspekt ein Schlauchheber vorgeschlagen, umfassend
- einen Hubschlauch mit einem Schlauchinnenraum, wobei der Hubschlauch durch Beaufschlagung des Schlauchinnenraums mit Unterdruck verkürzbar und durch Belüften des Schlauchinnenraums wieder verlängerbar ist;
- (optional): einen Endeffektor, insbesondere Form einer Sauggreifvorrichtung, zum Greifen eines Gegenstands
- (optional): eine zwischen Hubschlauch und Endeffektor angeordnete Bedienvorrichtung;
- ein Belüftungsventil zum Belüften des Schlauchinnenraums des Hubschlauchs, umfassend
   o eine mit dem Schlauchinnenraum strömungsverbundene Unterdruckseite,
   o eine mit der Atmosphäre strömungsverbundene Belüftungsseite
   o einen Ventilmechanismus zum Freigeben und Absperren einer Strömungsverbindung zwischen der Unterdruckseite und der Belüftungsseite, umfassend eine erste Ventilkörpereinrichtung mit wenigstens einem ersten Ventilkörper und eine zweite Ventilkörpereinrichtung mit wenigstens einem zweiten Ventilkörper, wobei die erste Ventilkörpereinrichtung in einer ersten Schaltrichtung ausgehend von einer Schließstellung in eine Offenstellung verstellbar ist, wobei die zweite Ventilkörpereinrichtungen in einer zweiten Schaltrichtung ausgehend von einer Schließstellung in eine Offenstellung verstellbar ist, wobei die Ventilkörpereinrichtungen miteinander derart bewegungsgekoppelt sind, dass bei einer Bewegung der ersten Ventilkörpereinrichtung in der ersten Schaltrichtung [d.h. in Richtung Offenstellung] die zweite Ventilkörpereinrichtung in der zweiten Schaltrichtung [d.h. in Richtung Offenstellung] bewegt wird und umgekehrt, wobei der Ventilmechanismus (16), insbesondere die Ventilkörpereinrichtungen (34-1, 34-2), derart ausgebildet ist, dass, bei Vorliegen eines Druckunterschieds zwischen der Unterdruckseite (12) und der Belüftungsseite (14), zumindest in der Schließstellung auf die erste Ventilkörpereinrichtung (34-1) eine in der ersten Schaltrichtung (38-1) wirkende erste Kraft ausgeübt wird und auf die zweite Ventilkörpereinrichtung (34-2) eine entgegen der zweiten Schaltrichtung (38-2) wirkende zweite Kraft ausgeübt wird, wobei der Ventilmechanismus (16), insbesondere die Ventilkörpereinrichtungen (34-1, 34-2), derart ausgebildet sind, dass sich die erste Kraft und die zweite Kraft betragsmäßig um maximal 10%, vorzugsweise maximal 5%, weiter vorzugsweise maximal 1%, voneinander unterscheiden, insbesondere identisch sind.

Die vorstehend im Zusammenhang mit dem Belüftungsventil gemäß dem ersten Aspekt beschriebenen optionalen Merkmale und Vorteile können auch zur Ausgestaltung des Schlauchhebers gemäß dem dritten Aspekt dienen, sodass zur Vermeidung von Wiederholungen auf vorstehende Offenbarung hierzu verwiesen wird.

Das Belüftungsventil kann sowohl an einem unteren Ende des Hubschlauches (bspw. an einer Bedienvorrichtung) als auch oben am Hubschlauch positioniert sein.

Das Belüftungsventil des Schlauchhebers kann auch gemäß dem zweiten Aspekt ausgebildet sein. Insofern wird gemäß einem vierten Aspekt ein Schlauchheber vorgeschlagen, umfassend:
- einen Hubschlauch mit einem Schlauchinnenraum, wobei der Hubschlauch durch Beaufschlagung des Schlauchinnenraums mit Unterdruck verkürzbar und durch Belüften des Schlauchinnenraums wieder verlängerbar ist;
- (optional): ein Endeffektor, insbesondere Form einer Sauggreifvorrichtung, zum Greifen eines Gegenstands
- (optional): eine zwischen Hubschlauch und Endeffektor angeordnete Bedienvorrichtung;
- ein Belüftungsventil zum Belüften des Schlauchinnenraums des Hubschlauchs, umfassend
   o eine mit dem Schlauchinnenraum des Hubschlauchs strömungsverbundene Unterdrucköffnung
   o eine, insbesondere mit der Atmosphäre verbundene, Belüftungsöffnung, und
   o einen um eine Drehachse drehbar gelagerten Ventilkörper, insbesondere in Form einer Trommel, wobei der Ventilkörper wenigstens eine radiale Durchgangsöffnung aufweist, wobei der Ventilkörper in einem Strömungsweg zwischen der Belüftungsöffnung und Unterdrucköffnung derart angeordnet ist, dass der Ventilkörper in einer ersten Drehlage um die Drehachse eine Schließstellung einnimmt, in welcher ein eine Strömungsverbindung zwischen der Belüftungsöffnung und der Unterdrucköffnung durch den Ventilkörper unterbrochen ist, und dass der Ventilkörper in einer von der ersten Drehlage verschiedenen zweiten Drehlage eine Offenstellung einnimmt, in welcher die Strömungsverbindung zwischen der Belüftungsöffnung und der Unterdrucköffnung durch die wenigstens eine Durchgangsöffnung hindurch hergestellt ist.

Die vorstehend im Zusammenhang mit dem Belüftungsventil gemäß dem zweiten Aspekt beschriebenen optionalen Merkmale und Vorteile können auch zur Ausgestaltung des Schlauchhebers gemäß dem vierten Aspekt dienen, sodass zur Vermeidung von Wiederholungen auf vorstehende Offenbarung hierzu verwiesen wird.

Die nachfolgenden optionalen Merkmale und Vorteile können sowohl zur Ausgestaltung des Schlauchhebers gemäß dem dritten Aspekt als auch zur Ausgestaltung des Schlauchhebers gemäß dem vierten Aspekt dienen:
Der Endeffektor kann durch den Schlauchinnenraum des Hubschlauchs hindurch mit Unterdruck versorgbar sein.

Die Bedienvorrichtung kann an einem Ende des Hubschlauchs angeordnet sein. Die Bedienvorrichtung kann einen, insbesondere einhändig umgreifbaren, Bediengriff aufweisen. Die Bedienvorrichtung kann eine Endeffektor-Kupplung zur Ankopplung eines Endeffektors aufweisen.

Das Belüftungsventil kann in der Bedienvorrichtung angeordnet sein. Die Bedienvorrichtung kann einen mit dem Schlauchinnenraum strömungsverbundenen Hubschlauchanschluss aufweisen. Dann kann die Unterdruckseite des Belüftungsventils (erster Aspekt) bzw. die Unterdrucköffnung (zweiter Aspekt) mit dem Hubschlauchanschluss strömungsverbunden sein.

Der Schlauchheber kann einen Bedienmechanismus zum Betätigen des Belüftungsventils, insbesondere zum Verstellen des Ventilmechanismus zwischen Schließstellung und Offenstellung bzw. zum Verstellen einer Drehlage des Ventilkörpers, aufweisen. Vorzugsweise ist der Bedienmechanismus an der Bedienvorrichtung angeordnet.

Gemäß einem fünften Aspekt wird eine Bedienvorrichtung für einen Schlauchheber vorgeschlagen, umfassend:
- einen Hubschlauchanschluss zur Strömungsverbindung mit einem Schlauchinnenraum eines Hubschlauchs des Schlauchhebers;
- eine Endeffektor-Kupplung zur Ankopplung des Endeffektors an die Bedienvorrichtung;
- ein Belüftungsventil gemäß dem ersten Aspekt oder dem zweiten Aspekt,
- einen Bedienmechanismus zum Betätigen des Belüftungsventils, insbesondere zum Verstellen des Ventilmechanismus zwischen Schließstellung und Offenstellung bzw. zum Verstellen einer Drehlage des Ventilkörpers.

Der Bedienmechanismus weist vorzugsweise auf: ein erstes Bedienelement, welches entlang einer ersten Betätigungsrichtung verstellbar ist, ein zweites Bedienelement, welches entlang einer zweiten Betätigungsrichtung verstellbar ist, und eine Kopplungseinrichtung, über welche die Bedienelemente mit dem Belüftungsventil mechanisch gekoppelt ist. Bei einer Ausgestaltung des Belüftungsventils gemäß dem ersten Aspekt sind die Bedienelemente vorzugsweise mit dem Ventilmechanismus mechanisch derart gekoppelt sind, dass durch Verstellen des ersten Bedienelements in der ersten Betätigungsrichtung der Ventilmechanismus in Richtung der Offenstellung verstellt wird und durch Verstellen des zweiten Bedienelements in der zweiten Betätigungsrichtung der Ventilmechanismus in Richtung der Schließstellung verstellt wird. Vorzugsweise greift die Kopplungseinrichtung an einem der beiden Ventilkörpereinrichtungen an. Bei einer Ausgestaltung des Belüftungsventils gemäß dem ersten Aspekt sind die Bedienelemente vorzugsweise mit dem Ventilmechanismus mechanisch derart gekoppelt sind, dass durch Verstellen des ersten Bedienelements in der ersten Betätigungsrichtung der Ventilkörper in die erste Drehlage überführt wird und durch Verstellen des zweiten Bedienelements in der zweiten Betätigungsrichtung der Ventilkörper in die zweite Drehlage überführt wird.

Die Erfindung wird im Folgenden anhand der Figuren näher erläutert. Es zeigen:
- Fig. 1: skizzierte Darstellung einer beispielhaften Ausgestaltung einer ersten Realisierungsform des Belüftungsventils in einer Schnittansicht bei Ventilmechanismus in Schließstellung;
- Fig. 2: das Belüftungsventil gemäß Fig. 1 bei Ventilmechanismus in Offenstellung;
- Fig. 3: eine skizzierte Darstellung des Ventilmechanismus des Belüftungsventils gemäß Fig. 1;
- Fig. 4: vereinfachte schematische Darstellung einer beispielhaften Ausgestaltung einer zweiten Realisierungsform des Belüftungsventils in einer Schnittansicht bei Ventilmechanismus in Offenstellung;
- Fig. 5: eine skizzierte Darstellung einer Ausgestaltung eines Schlauchhebers;
- Fig. 6: eine skizzierte Darstellung der Bedienvorrichtung des Schlauchhebers gemäß Fig. 5 mit angekoppeltem Endeffektor;
- Fig. 7: die Bedienvorrichtung gemäß Fig. 5 in einer Schnittansicht;
- Fig. 8: skizzierte Darstellung einer Baugruppe des Bedienmechanismus der Bedienvorrichtung gemäß Fig. 7 in einer Schnittansicht;
- Fig. 9: die Baugruppe gemäß Fig. 8 in einer Explosionsdarstellung;
- Fig. 10: skizzierte Darstellung einer weiteren Ausgestaltung eines Belüftungsventils in einer perspektivischen Ansicht mit optionalem Bedienmechanismus; und
- Fig. 11: das Belüftungsventil gemäß Fig. 10 in einer Seitenansicht.

In der nachfolgenden Beschreibung sowie in den Figuren sind für identische oder einander entsprechende Merkmale jeweils dieselben Bezugszeichen verwendet.

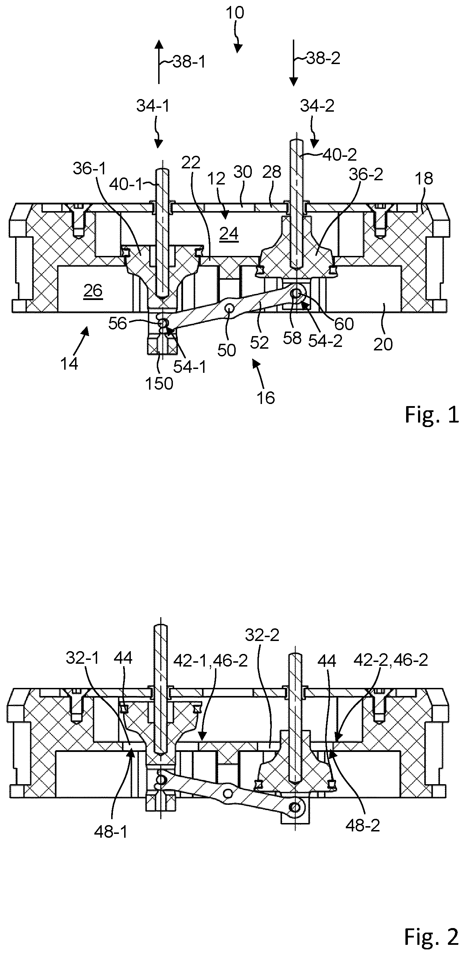

Die Figur 1 zeigt in skizzierter Darstellung eine beispielhafte Ausgestaltung einer ersten Realisierungsform eines Belüftungsventils, welches insgesamt mit dem Bezugszeichen 10 bezeichnet ist.

Das Belüftungsventil 10 weist eine Unterdruckseite 12 und eine gegenüberliegende Belüftungsseite 14 auf. Das Belüftungsventil 10 weist außerdem einen, im Beispiel zwischen der Unterdruckseite 12 und der Belüftungsseite 14 angeordneten, Ventilmechanismus 16 zum Freigeben und Sperren einer Strömungsverbindung zwischen der Unterdruckseite 12 und der Belüftungsseite 14.

Im Beispiel weist das Belüftungsventil 10 ein Ventilgehäuse 18 auf, welches einen Ventilinnenraum 20 begrenzt. Der Ventilinnenraum 20 ist durch eine Wandung 22 des Ventilgehäuses 18 in eine erste Kammer 24 (Unterdruckkammer) und eine zweite Kammer 26 (Belüftungskammer) unterteilt.

Im Betrieb ist die Unterdruckkammer 24 insbesondere mit einer Unterdruckquelle (nicht dargestellt) verbunden. Bei einem Einsatz des Belüftungsventils 10 in einem Schlauchheber 100, ist die Unterdruckseite 12 beispielsweise mit dem Schlauchinnenraum eines Hubschlauchs 102 des Schlauchhebers 100 verbunden.

Im konkreten Beispiel ist die Unterdruckkammer 24 durch eine Deckelplatte 28 begrenzt, welche eine Durchgangsöffnung 30 zur Verbindung mit der Unterdruckquelle aufweist.

Die Belüftungskammer 26 ist mit der Atmosphäre verbunden. Beispielsweise kann die Belüftungskammer 26 mit einem Belüftungsanschluss 128 (siehe unten) strömungsverbunden sein.

Wie aus Figur 2 ersichtlich, sind in der Wandung 22 zwei Strömungsöffnungen 32-1, 32-2 ausgebildet, welche - in einer Offenstellung des Ventilmechanismus (nachfolgend noch näher erläutert) - eine Strömungsverbindung zwischen Belüftungsseite 26 und Unterdruckseite 24 hergestellt ist.

Der Ventilmechanismus 16 umfasst eine erste Ventilkörpereinrichtung 34-1, welche mit der ersten Strömungsöffnung 32-1 zusammenwirkt, und eine zweite Ventilkörpereinrichtung 34-2, welche mit der zweiten Strömungsöffnung 32-2 zusammenwirkt.

Im dargestellten Beispiel weist jeder der Ventilkörpereinrichtungen 34-1, 34-2 einen Ventilkörper 36-1, 36-2 auf. Wie aus den Figuren 1 und 2 ersichtlich, erstrecken sich die Ventilkörper 36-1, 36-2 durch die jeweils zugeordnete Strömungsöffnung 32-1, 32-2.

Die Ventilkörper 36-1, 36-2 sind zwischen einer Schließstellung (vgl. Fig. 1) und einer Offenstellung (vgl. Fig. 2) verstellbar. Im Konkreten ist der erste Ventilkörper 36-1 in einer ersten Schaltrichtung 38-1 ausgehend von der Schließstellung in die Offenstellung verstellbar und der zweite Ventilkörper 36-2 ist in einer zweiten Schaltrichtung 38-2 auf den von seiner Schließstellung in die Offenstellung verstellbar.

Wie aus Figur 1 ersichtlich, sind bei der gezeigten Realisierungsform die erste Schaltrichtung 38-1 und die zweite Schaltrichtung 38-2 entgegengesetzt orientiert. Insofern bewegen sich der erste Ventilkörper 36-1 der ersten Ventilkörpereinrichtung 34-1 und der zweite Ventilkörper 36-2 der zweiten Ventilkörpereinrichtung 34-2 in entgegengesetzte Richtungen ausgehend von der jeweiligen Schließstellung in die jeweilige Offenstellung.

Beispielhaft und bevorzugt sind die Schaltrichtungen 38-1, 38-2 parallel zu einer Hauptströmungsrichtung für Strömungen von der Belüftungsseite 14 zu der Unterdruckseite 12 ausgerichtet.

Im konkreten Beispiel sind die Ventilkörper 36-1, 36-2 über einen jeweiligen Führungsstift 40-1, 40-2 entlang der jeweiligen Schaltrichtung 38-1, 38-2 geführt. Die Führungsstifte 40-1, 40-2 sind beispielhaft in der vorstehend erwähnten Deckelplatte 28 axial geführt.

Wie aus Figur 1 ersichtlich, liegen die Ventilkörper 36-1, 36-2 in der jeweiligen Schließstellung an einem, im Beispiel durch einen die jeweilige Strömungsöffnung 32-1, 32-2 begrenzenden Wandungsabschnitt der Wandung 22 gebildeten, Ventilsitz 42-1, 42-2 an. Zur Abdichtung sind an den Ventilkörpern 36-1, 36-2 entsprechende Dichtelemente 44, beispielsweise in Form von O-Ringen, angeordnet. Bei nicht dargestellten Ausgestaltungen können die Dichtelemente 44 aber auch an den Ventilsitzen Ventilsitz 42-1, 42-2 angeordnet sein.

Wie aus Figur 2 ersichtlich, sind die Ventilkörper 36-1, 36-2 in der Offenstellung von dem jeweiligen Ventilsitz 42-1, 42-2 abgehoben, sodass zwischen Ventilkörper 36-1, 36-2 und einem die jeweilige Strömungsöffnung 32-1, 32-2 begrenzenden Wandungsabschnitt 46-1, 46-2 der Wandung 22 ein Belüftungsspalt 48-1, 48-2 gebildet ist, durch welche bei Vorliegen eines Druckunterschieds zwischen der Unterdruckseite 12 und der Belüftungsseite 14 ein Strömungsfluss führt.

Wie vorstehend erwähnt, sind die erste Ventilkörpereinrichtung 34-1 und die zweite Ventilkörpereinrichtung 34-2 miteinander derart bewegungsgekoppelt, dass bei einer Bewegung des ersten Ventilkörpers 36-1 ausgehend von der Schließstellung in die Offenstellung, d.h. in erster Schaltrichtung 38-1, der zweite Ventilkörper 36-2 ebenfalls ausgehend von der Schließstellung in die Offenstellung, d.h. in zweiter Schaltrichtung 38-1, verlagert wird.

Dies ist im Beispiel dadurch realisiert, dass der erste Ventilkörper 36-1 und der zweite Ventilkörper 36-2 über ein um eine Drehachse 50 drehbar gelagertes Kopplungselement 52, beispielhaft in Form einer Kopplungsstange, miteinander mechanisch verbunden sind.

Wie aus Figur 1 ersichtlich, ist das Kopplungselement 52 an einem ersten Kopplungsabschnitt 54-1 zur Verbindung mit dem ersten Ventilkörper 36-1 in Form einer Gabel ausgebildet, welche mit einem am ersten Ventilkörper 36-1 angeordneten Bolzen 56 zusammenwirkt. An einem gegenüberliegenden zweiten Kopplungsabschnitt 54-2 zur Verbindung mit dem zweiten Ventilkörper 36-2 weist das Kopplungselement vorzugsweise ein Langloch 58 auf, in welches ein an dem zweiten Ventilkörper 36-2 angeordneter Bolzen 60 eingreift.

Wie vorstehend erwähnt, sind die Ventilkörpereinrichtungen 34-1, 34-2 derart bemessen, dass bei Vorliegen eines Druckunterschieds zwischen der Unterdruckseite 12 und der Belüftungsseite 14 die erste Ventilkörpereinrichtung 34-1 in der ersten Schaltrichtung 38-1 und die zweite Ventilkörpereinrichtung 34-2 entgegen der zweiten Schaltrichtung 38-2 derart beaufschlagt werden, dass die Ventilkörpereinrichtungen 34-1, 34-2 in Folge der Bewegungskopplung in ihrer momentanen Position verbleiben.

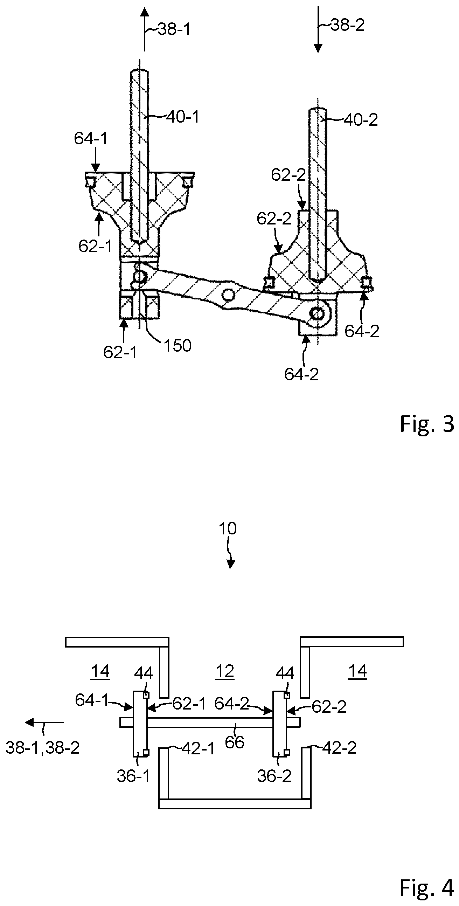

Wie in Figur 3 gezeigt, weisen im konkreten Beispiel die Ventilkörper 36-1, 36-2 jeweils erste Wirkflächenabschnitte 62-1, 62-2 auf, durch Beaufschlagen derer mit Druck eine Kraft auf den jeweiligen Ventilkörper 36-1, 36-2 entlang der jeweiligen Schaltrichtung 38-1, 38-2 ausgeübt wird. Darüber hinaus weisen die Ventilkörper 36-1, 36-2 jeweils zweite Wirkflächenabschnitte 64-1, 64-2 auf, durch Beaufschlagen derer mit Druck eine Kraft auf den jeweiligen Ventilkörper 36-1, 36-2 entgegen der jeweiligen Schaltrichtung 38-1, 38-2 ausgeübt wird. Dabei sind die Ventilkörper 36-1, 36-2 derart bemessen, dass sich eine Differenz aus der Summe aller ersten Wirkflächenabschnitte 62-1 der ersten Ventilkörpereinrichtung 34-1 und der Summe aller zweiten Wirkflächenabschnitte 64-1 der ersten Ventilkörpereinrichtung 34-1 von einer der Differenz aus der Summe aller ersten Wirkflächenabschnitte 62-2 der zweiten Ventilkörpereinrichtung 34-2 und der Summe aller zweiten Wirkflächenabschnitte 64-2 der zweiten Ventilkörpereinrichtung 34-2 betragsmäßig um maximal 10%, vorzugsweise maximal 5%, weiter vorzugsweise maximal 1%, unterscheidet.

Im konkreten Beispiel ist dies dadurch realisiert, dass die Ventilkörper 36-1, 36-2 eine im Wesentlichen identische Außenkontur aufweisen. Bei nicht dargestellten Ausgestaltungen ist es aber auch denkbar, dass die Ventilkörpereinrichtungen 34-1, 34-2 jeweils mehr als einen Ventilkörper 36-1, 36-2 und/oder eine unterschiedliche Anzahl an Ventilkörpern 36-1, 36-2 aufweisen. Dann sind die Ventilkörper 36-1, 36-2 vorzugsweise derart ausgebildet, dass

Wie aus Figur 3 ersichtlich, sind die Ventilkörper 36-1, 36-2 optional derart ausgebildet, dass sich entlang ihrer Erstreckung entgegen der jeweiligen Schaltrichtung 38-1, 38-2 radial verjüngen, also entlang ihrer Erstreckung entgegen der Schaltrichtung sich ein Durchmesser verringert. Bei einer Verlagerung der Ventilkörper 36-1, 36-2 in Schaltrichtung 38-1, 38-2 nimmt insofern eine Größe des Belüftungsspalts 48-1, 48-2 progressiv zu.

Die Figur 4 zeigt in vereinfachter schematischer Darstellung eine beispielhafte Ausgestaltung einer zweiten Realisierungsform des Belüftungsventils, welches insgesamt mit dem Bezugszeichen 10' bezeichnet ist.

Merkmale, bereits im Zusammenhang mit der Realisierungsform gemäß Figuren 1 bis 3 erläutert wurden, werden nicht mehr erneut beschrieben, es sei denn, es ist für die besondere Ausgestaltung gemäß Figur 4 erforderlich. Gleiche oder äquivalente Merkmale sind dabei mit gleichen Bezugszeichen bezeichnet.

Wie aus Figur 4 ersichtlich, sind bei der Realisierungsform gemäß Figur 4 die erste Ventilkörpereinrichtung 34-1 bzw. der erste Ventilkörper 36-1 und die zweite Ventilkörpereinrichtung 34-2 bzw. der zweite Ventilkörper 36-2 über ein Verbindungselement 66 miteinander starr verbunden und somit bewegungsgekoppelt. In Abgrenzung zur ersten Realisierungsform sind insofern die erste und die zweite Schaltrichtung 38-1, 38-2 gleich orientiert, im Beispiel sogar identisch.

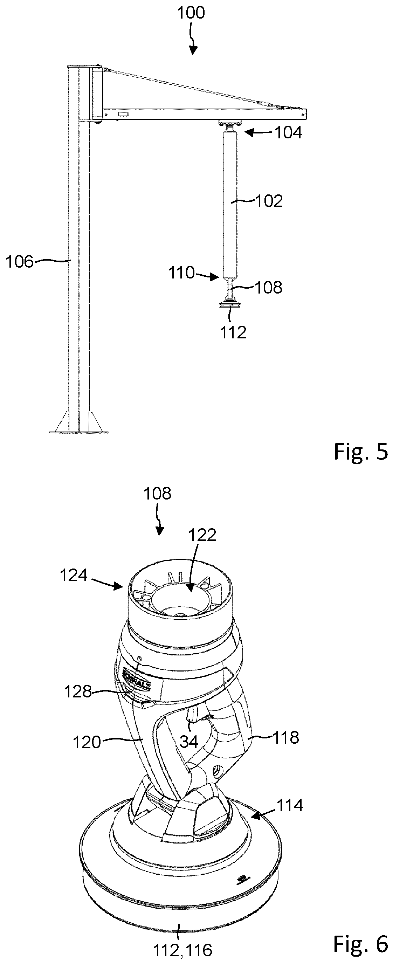

Nachfolgend wird unter Bezugnahme auf die Figuren 5 bis 9 eine beispielhafte Anwendung des vorstehend beschriebenen Belüftungsventils 10 in einem Schlauchheber 100 erläutert.

Die Figur 5 zeigt eine beispielhafte Ausgestaltung eines Schlauchhebers, welcher insgesamt mit dem Bezugszeichen 100 bezeichnet ist. Der Schlauchheber 100 umfasst einen Hubschlauch 102, welcher einen Schlauchinnenraum umschließt. Der Hubschlauch 102 ist durch Beaufschlagen des Schlauchinnenraums mit Unterdruck verkürzbar und durch Belüften des Schlauchinnenraums wieder verlängerbar. Mit anderen Worten wird der Hubschlauch 102 je nach Druckniveau im Schlauchinnenraum reversibel verkürzt oder verlängert sich, z.B. unter der Wirkung der Gewichtskraft.

Der Hubschlauch 102 ist im Beispiel an einem ersten (oberen) Ende 104 an einem Manipulator 106, bspw. in Form eines Säulenschwenkkrans, gehaltert und somit von dem Manipulator 106 verlagerbar. Bei nicht dargestellten Ausgestaltungen kann der Hubschlauch 102 aber auch an einem Träger, bspw. einem Gerüst oder einer Gebäudedecke, gehaltert sein.

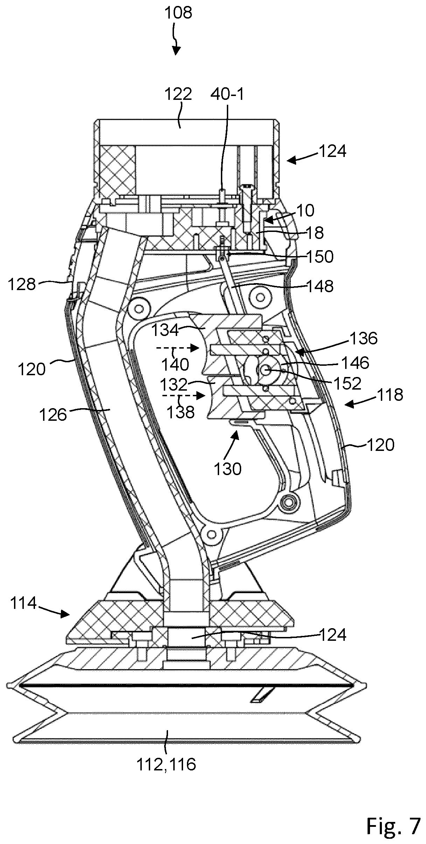

Um den Schlauchheber 100 zu bedienen, ist eine Bedienvorrichtung 108 vorgesehen (Detailansicht vgl. Figuren 6 und 7). Die Bedienvorrichtung 108 ist an dem zweiten (unteren) Ende 110 des Hubschlauchs 102 gehaltert.

Der Schlauchheber 100 umfasst außerdem einen Endeffektor 112 zum Greifen eines Gegenstandes (nicht dargestellt). Der Endeffektor 112 ist über eine an der Bedienvorrichtung 108 ausgebildete Endeffektor-Kupplung 114 an der Bedienvorrichtung 108 gehaltert und somit mit dem Hubschlauch 102 verbunden. Durch Verkürzen des Hubschlauches 102 kann der Endeffektor 112 und somit ein von dem Endeffektor 112 gegriffener Gegenstand angehoben werden.

Beispielhaft und bevorzugt ist der Endeffektor 112 als Sauggreifvorrichtung 116 zum Ansaugen eines Gegenstands ausgebildet. Wie nachfolgend noch im Detail erläutert, ist der Endeffektor 112 im Beispiel durch den Schlauchinnenraum des Hubschlauchs 102 hindurch mit Unterdruck versorgbar. Bei nicht dargestellten Ausgestaltungen kann der Endeffektor 112 aber auch bspw. als Haken oder mechanischer Greifer ausgebildet sein.

Eine bevorzugte Ausgestaltung der Bedienvorrichtung 108 wird nachfolgend unter Bezugnahme auf die Figuren 6 und 7 näher erläutert.

Die Bedienvorrichtung 108 umfasst einen Bediengriff 118 (Handgriff), welcher insbesondere derart ausgeformt ist, dass eine Bedienperson ihn mit einer Hand greifen kann. Insofern handelt es sich bei der Bedienvorrichtung 108 insbesondere um eine Einhand-Bedienvorrichtung.

Wie in Figur 7 erkennbar, ist der Bediengriff 118 beispielhaft und bevorzugt als Hohlkörper ausgebildet. Im Konkreten kann der Bediengriff 118 durch einen Gehäuseabschnitt eines Gehäuses 120 der Bedienvorrichtung 108 ausgebildet sein.

Die Bedienvorrichtung 108 umfasst außerdem einen Hubschlauchanschluss 122 zur Strömungsverbindung mit dem Schlauchinnenraum des Hubschlauchs 102 (vgl. Fig. 6). Der Hubschlauchanschluss 122 kann insbesondere Teil einer Hubschlauch-Kupplung 124 sein, welche außerdem eine Verbindungseinrichtung zur mechanischen Verbindung der Bedienvorrichtung 108 mit dem Hubschlauch 102 umfasst.

Die Bedienvorrichtung 108 weist an einer dem Hubschlauchanschluss 122 gegenüberliegenden Seite die vorstehend erwähnte Endeffektor-Kupplung 114 zur Ankopplung des Endeffektors 108 auf (vgl. Fig. 6). Die Endeffektor-Kupplung 114 kann beispielsweise wie in DE 10 2023 102 439.6 beschrieben ausgebildet sein, deren Offenbarungsgehalt hiermit durch Verweis einbezogen wird.

Im Beispiel umfasst die Endeffektor-Kupplung 114 einen optionalen Sauganschluss 124 zur Strömungsverbindung mit dem Endeffektor 112. Beispielhaft ist der Sauganschluss 124 mittels einer optionalen rohrartigen Fluidführung 126 mit dem Hubschlauchanschluss 18 strömungsverbunden und somit durch den Hubschlauch 102 hindurch mit Unterdruck versorgbar. Bei nicht dargestellten Ausgestaltungen kann eine derartige Fluidführung 126 aber auch entfallen.

Die Bedienvorrichtung 108 umfasst außerdem ein vorstehend beschriebenes Belüftungsventil 10 zum Belüften des Hubschlauchanschlusses 122 und somit des Schlauchinnenraums des Hubschlauchs 102. Das Belüftungsventil 10 ist innerhalb des Gehäuses 120 der Bedienvorrichtung 108 angeordnet (vgl. Fig. 7).

Im Konkreten ist die Unterdruckseite 12 des Belüftungsventils 10 mit dem Hubschlauchanschluss 122 und somit mit dem Schlauchinnenraum des Hubschlauchs 102 strömungsverbunden. Die Belüftungsseite 14 des Belüftungsventils 10 ist hingegen mit einem Belüftungsanschluss 128, insbesondere Belüftungsöffnung, der Bedienvorrichtung 108 und somit mit der Umgebung (Atmosphäre) strömungsverbunden. Der Belüftungsanschluss 128 ist beispielhaft durch entsprechende Durchbrüche oder Öffnungen in dem Gehäuse 120 gebildet (vgl. Fig. 7).

Zum Betätigen des Belüftungsventils 10 ist ein Bedienmechanismus 130 vorgesehen, mittels dessen der Ventilmechanismus 160 zwischen der Schließstellung und der Offenstellung verstellbar ist.

Eine beispielhafte Ausgestaltung eines solchen Bedienmechanismus 130 wird nachfolgend unter Bezugnahme auf die Figur 7 näher erläutert. Der Bedienmechanismus 130 umfasst ein erstes Bedienelement 132 und ein zweites Bedienelement 134. Der Bedienmechanismus 130 umfasst außerdem eine Kopplungseinrichtung 136, über welche eine Betätigungsbewegung der Bedienelemente 132, 134 auf den Ventilmechanismus 16 übertragen wird (nachfolgend noch im Detail erläutert).

Das erste Bedienelement 132 ist entlang einer ersten Betätigungsrichtung 138 verstellbar und das zweite Bedienelement 134 ist entlang einer zweiten Betätigungsrichtung 140 verstellbar. Beispielhaft und bevorzugt, sind die erste und die zweite Betätigungsrichtung 138, 140 zueinander parallel orientiert.

Wie in Figur 7 erkennbar, sind das erste Bedienelement 132 und das zweite Bedienelement 134 beispielhaft und bevorzugt nebeneinander an der gleichen Seite des Bediengriff 118 angeordnet. Vorzugsweise ist der Bediengriff 118 derart ausgeformt, dass eine Bedienperson ihn mit einer Hand greifen kann und dabei die Bedienelemente 132, 134 mit dieser Hand betätigen kann (z.B. das erste Bedienelement 132 mit dem Mittelfinger und das zweite Bedienelement 134 mit dem Zeigefinger).

Die Bedienelemente 132, 134 sind ausgehend von einer in Fig. 7 gezeigten Neutralstellung wechselseitig in eine Betätigungsstellung (ausgehend von der Neutralstellung in Betätigungsrichtung eingedrückt) und eine Nicht-Betätigungsstellung (ausgehend von der Neutralstellung entgegen der Betätigungsrichtung herausgedrückt) verstellbar. Das erste Bedienelement 132 und das zweite Bedienelement 134 sind dabei über die Kopplungseinrichtung 136 mechanisch derart zwangsgekoppelt, dass beim Überführen des ersten Bedienelementes 132 in Betätigungsrichtung 138 (also bei Betätigen des ersten Bedienelements 132) das zweite Bedienelement 134 automatisch entgegen der Betätigungsrichtung 140 überführt wird und umgekehrt.

Wie bspw. aus den Figuren 6 und 7 gut ersichtlich, ist das erste Bedienelement 132 über ein erstes Übertragungselement 142 in Form eines Übertragungsstifts und das zweite Bedienelement 134 über ein zweites Übertragungselement 144 mit einem Kopplungselement 146 bewegungsgekoppelt. Das Kopplungselement 146 ist wiederum über ein Verbindungselement 148 in Form eines Übertragungsbügels mit dem Ventilmechanismus 16 bewegungsgekoppelt. Im konkreten Beispiel greift das Verbindungselement 148 an einem entsprechenden Verbindungsabschnitt 150 des ersten Ventilkörpers 36-1 (vgl. Fig. 1) an.

Das Kopplungselement 146 ist um eine Drehachse 152 drehbar gelagert. Im konkreten Beispiel ist das Kopplungselement 146 drehbar in einem Führungsabschnitt bzw. Führungsaufnahme 154 eines Führungsteils 156 aufgenommen. Das Kopplungselement 146 ist beispielhaft und bevorzugt in Form einer Trommel 158 ausgebildet.

Das Führungsteil 156 ist insbesondere in den Bediengriff 118 (Gehäuse 120) eingesetzt und dort befestigt. Bei nicht dargestellten Ausgestaltungen kann die Führungsaufnahme 154 auch integral mit dem Gehäuse 120 ausgebildet sein.

Wie aus Fig. 4 ersichtlich, greifen die Übertragungselemente 142, 144 exzentrisch an dem Kopplungselement 146 an, insbesondere an gegenüberliegenden Seiten in Bezug auf die Drehachse 152.

Die ist beispielhaft dadurch realisiert, dass die Übertragungselemente 142, 144 lokale Aussparungen 160 aufweisen, welche mit an dem Kopplungselement 146 vorgesehenen Bolzen 162 zusammenwirken. Die Bolzen 162 sind beispielhaft separat von dem Kopplungselement 146 ausgebildet und in entsprechende Bohrungen 164 in dem Kopplungselement 146 eingesteckt. Bei nicht dargestellten Ausgestaltungen können die Bolzen 162 aber auch einstückig mit dem Kopplungselement 146 ausgebildet sein, bspw. durch entsprechende Vorsprünge am Kopplungselement 146.

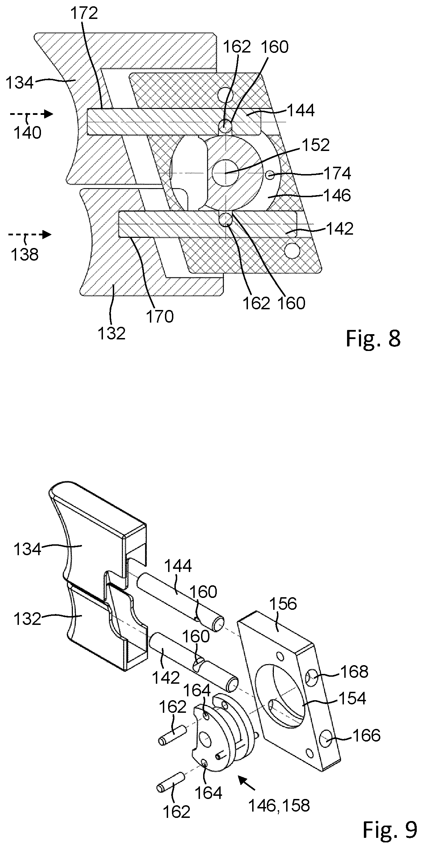

Wird das erste Bedienelement 132 betätigt, d.h. in erster Betätigungsrichtung 138 verstellt, wird diese Verstellbewegung über das erste Übertragungselement 142 auf das Kopplungselement 146 übertragen, welches sich sodann um die Drehachse 152 dreht (in der Darstellung gemäß Figur 8 entgegen dem Uhrzeigersinn). Dies führt dazu, dass das zweite Bedienelement 134 aufgrund der Bewegungskopplung über das Kopplungselement 146 und das zweite Übertragungselement 144 entgegen der zweiten Betätigungsrichtung 140 verstellt wird.

Das erste und das zweite Bedienelement 132, 134 sind insofern über das Kopplungselement 146 derart miteinander bewegungsgekoppelt, dass die Bedienelemente 132, 134 wechselseitig eine Betätigungsstellung und eine Nicht-Betätigungsstellung einnehmen können.

Wie aus den Figuren 8 und 9 ersichtlich, sind die Übertragungselemente 142, 144 (Übertragungsstifte) in entsprechenden Führungen 166, 168 (Stiftführungen) linear verschiebbar geführt.

Die Führungen 166, 168 für die Übertragungselemente 142, 144 sind beispielhaft in dem Führungsteil 156 ausgebildet, in dem auch die Führungsaufnahme 154 für das Kopplungselement 146 ausgebildet ist.

Wie aus Fig. 8 ersichtlich, sind die Übertragungselemente 142, 144 in entsprechenden Aufnahmen 170, 172 in den Bedienelementen 132, 134 aufgenommen, sodass die Bedienelemente 132, 134 über die Übertragungselemente 142, 144 entlang ihrer Betätigungsrichtungen 138, 140 linear geführt sind.

Wie vorstehend erwähnt, wird eine Verstellbewegung der Bedienelemente 132, 134 über das Kopplungselement 146 auf ein Verbindungselement 148 übertragen, welches wiederum an dem Ventilmechanismus 16 angreift.

Das Verbindungselement 148 greift ebenfalls exzentrisch an dem Kopplungselement 146 an. Insbesondere ist das Verbindungselement 148 an einem Angriffspunkt 174 drehbar an dem Kopplungselement 146 gelagert. Bei einer Drehbewegung des Kopplungselements 146 um die Drehachse 152 wird insofern das Verbindungselement 148 verstellt.

Bei der Darstellung gemäß Fig. 8 wird das Verbindungselement 148 beispielsweise bei Betätigung des ersten Bedienelements 132 und der damit einhergehenden Drehbewegung des Kopplungselements 146 entgegen dem Uhrzeigersinn nach oben verlagert und somit der erste Ventilkörper 36-1 in Schaltrichtung 38-1 bewegt. Im Gegenzug wird das Verbindungselement 148 bei Betätigung des zweiten Bedienelements 134 und der damit einhergehenden Drehbewegung des Kopplungselements 146 im Uhrzeigersinn das Verbindungselement 148 nach unten verlagert und somit der erste Ventilkörper 36-1 entgegen der Schaltrichtung 38-1 in Richtung Schließstellung bewegt. Auf diese Weise ist eine Betätigung des Belüftungsventils 10 ermöglicht.

Die Sauggreifvorrichtung 116 kann grundsätzlich über eine separate Unterdruckversorgung mit Unterdruck versorgt werden. Vorzugsweise wird die Sauggreifvorrichtung 116 jedoch über die optionale Fluidführung 126 und den Sauganschluss 124 mit Unterdruck versorgt. In diesem Zusammenhang ist es möglich, dass an der Sauggreifvorrichtung 116 selbst ein Steuerventil (nicht dargestellt) vorgesehen ist, über welches eine über den Sauganschluss 124 bereitgestellte Unterdruckzufuhr wahlweise freigebbar (zum Ansaugen und somit Greifen eines Gegenstands) oder absperrbar (zum Ablegen des Gegenstands) ist.

Es ist aber auch denkbar, dass eine solche Steuerung der Unterdruckzufuhr zu der Sauggreifvorrichtung 116 in der Bedienvorrichtung 108 realisiert ist. Beispielsweise kann der Bedienmechanismus 130 zusätzlich mit einem Steuerventil (nicht dargestellt) zusammenwirken, welches dazu ausgebildet ist, eine Unterdruckzufuhr zu der Sauggreifvorrichtung 116 über die Fluidführung 126 zu steuern.

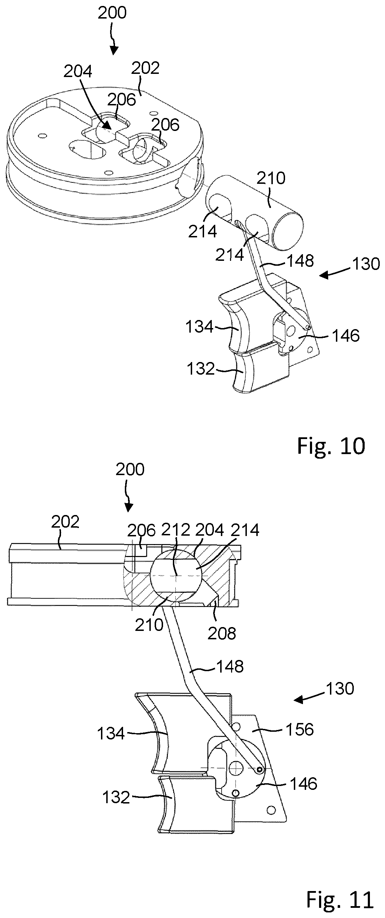

Die Figuren 10 und 11 zeigen in skizzierter Darstellung eine beispielhafte Ausgestaltung einer weiteren Ausgestaltung eines Belüftungsventils, welches insgesamt mit dem Bezugszeichen 200 bezeichnet ist. In den Figuren 10 und 11 ist - lediglich zum besseren Verständnis - zudem der beispielhafte Bedienmechanismus 130 gezeigt, wie er vorstehend in Bezug auf Figur 7 beschrieben wurde. Das Belüftungsventil 200 kann aber auch durch einen anderen Bedienmechanismus 130 betätigbar sein.

Das Belüftungsventil 200 weist ein, beispielhaft scheibenförmiges, Ventilgehäuse 202 auf, welches einen Ventilinnenraum 204 begrenzt.

Das Ventilgehäuse 202 weist an einer ersten Seite zwei erste Öffnungen 206 auf und an einer gegenüberliegenden Seite zwei zweite Öffnungen 208 auf. Bei nicht dargestellten Ausgestaltungen können auch mehr oder weniger erste oder zweite Öffnungen 206, 208 vorgesehen sein.

Die ersten Öffnungen 206 bilden Unterdrucköffnungen des Belüftungsventils 200. Bei einem Einbau des Belüftungsventils 200 in einem Schlauchheber 100 sind die ersten Öffnungen 206 insbesondere mit dem Schlauchinnenraum des Hubschlauchs 102, beispielsweise über den Hubschlauchanschluss 122 einer Bedienvorrichtung 108, strömungsverbunden. Die zwei zweiten Öffnungen 208 sind hingegen mit der Atmosphäre, insbesondere dem Belüftungsanschluss 128, strömungsverbunden und bilden insofern Belüftungsöffnungen des Belüftungsventils 200.

In dem Ventilinnenraum 204 ist (in einem Strömungsweg zwischen den ersten Öffnungen 206 und den zweiten Öffnungen 208) ein Ventilkörper 210 angeordnet. Der Ventilkörper 210 ist beispielhaft und bevorzugt als Trommel ausgebildet, welche um eine Ventilkörper-Drehachse 212 drehbar in dem Ventilgehäuse 78 gelagert ist.

Insbesondere ist die Ventilkörper-Drehachse 212 geneigt, vorzugsweise orthogonal, zu einer Hauptströmungsrichtung von der wenigstens einen zweiten Öffnung 208 zu der wenigstens einen ersten Öffnung 206 orientiert.

Der Ventilkörper 210 weist für jedes Paar aus erster Öffnung 206 und zugeordneter zweiter Öffnung 208 eine radiale Durchgangsöffnung 214 auf.

In Abhängigkeit einer Drehlage des Ventilkörpers 210 um die Ventilkörper-Drehachse 212 ist ein Strömungsweg zwischen den ersten Öffnungen 206 und den zweiten Öffnungen 208 entweder durch den Ventilkörper 210 abgesperrt oder durch die Durchgangsöffnungen 214 freigegeben. Bei einem Einsatz in einem Schlauchheber 100 ist auf diese Weise der Schlauchinnenraum des Hubschlauchs 102 bedarfsweise belüftbar.

Wie aus den Figuren 10 und 11 ersichtlich, ist die Ventilkörper-Drehachse 212 bei einem beispielhaften Einsatz des Belüftungsventils 200 in einem Schlauchheber 100 mit vorstehend beschriebenem Bedienmechanismus 130 vorzugsweise parallel zu der Drehachse 152 des Kopplungselements 146 ausgerichtet. Insbesondere greift das vorstehend beschriebe Verbindungselement 148 (Übertragungsbügel) des Bedienmechanismus 132 an dem Ventilkörper 212 an, sodass durch Verstellen des Verbindungselements 148 eine Drehlage des Ventilkörpers 210 um die Ventilkörper-Drehachse 212 - und somit eine Offenstellung des Belüftungsventils 200 - verstellbar ist.

## Patentansprüche

1. Belüftungsventil (10) für einen Schlauchheber (100), umfassend
- eine Unterdruckseite (12),
- eine, insbesondere mit der Atmosphäre verbundene, Belüftungsseite (14),
- einen Ventilmechanismus (16) zum Freigeben und Absperren einer Strömungsverbindung zwischen der Unterdruckseite (12) und der Belüftungsseite (14),
**dadurch gekennzeichnet, dass** der Ventilmechanismus (16) eine erste Ventilkörpereinrichtung (34-1) mit wenigstens einem ersten Ventilkörper (36-1) und
eine zweite Ventilkörpereinrichtung (34-2) mit wenigstens einem zweiten Ventilkörper (36-2) aufweist, wobei die erste Ventilkörpereinrichtung (34-1) in einer ersten Schaltrichtung (38-1) ausgehend von einer Schließstellung in eine Offenstellung verstellbar ist, wobei die zweite Ventilkörpereinrichtungen (34-2) in einer zweiten Schaltrichtung (38-2) ausgehend von einer Schließstellung in eine Offenstellung verstellbar ist, wobei die Ventilkörpereinrichtungen (34-1, 34-2) miteinander derart bewegungsgekoppelt sind, dass bei einer Bewegung der ersten Ventilkörpereinrichtung (34-1) in der ersten Schaltrichtung (38-1) die zweite Ventilkörpereinrichtung (34-2) in der zweiten Schaltrichtung (38-2) mitbewegt wird und umgekehrt, wobei der Ventilmechanismus (16), insbesondere die Ventilkörpereinrichtungen (34-1, 34-2), derart ausgebildet ist, dass, bei Vorliegen eines Druckunterschieds zwischen der Unterdruckseite (12) und der Belüftungsseite (14), zumindest in der Schließstellung auf die erste Ventilkörpereinrichtung (34-1) eine in der ersten Schaltrichtung (38-1) wirkende erste Kraft ausgeübt wird und auf die zweite Ventilkörpereinrichtung (34-2) eine entgegen der zweiten Schaltrichtung (38-2) wirkende zweite Kraft ausgeübt wird, wobei der Ventilmechanismus (16), insbesondere die Ventilkörpereinrichtungen (34-1, 34-2), derart ausgebildet sind, dass sich die erste Kraft und die zweite Kraft betragsmäßig um maximal 10%, vorzugsweise maximal 5%, weiter vorzugsweise maximal 1%, voneinander unterscheiden, insbesondere identisch sind.

2. Belüftungsventil (10) nach Anspruch 1, wobei die Ventilkörpereinrichtungen (34-1, 34-2), insbesondere die Ventilkörper (36-1, 36-2), jeweils erste Wirkflächenabschnitte (62-1, 62-2) aufweisen, durch Beaufschlagen derer mit Druck eine Kraft auf die Ventilkörpereinrichtung (34-1, 34-2) in der jeweiligen Schaltrichtung (38-1, 38-2) ausgeübt wird und wobei die Ventilkörpereinrichtungen (34-1, 34-2), insbesondere die Ventilkörper (36-1, 36-2), jeweils zweite Wirkflächenabschnitte (64-1, 64-2) aufweisen, durch Beaufschlagen derer mit Druck eine Kraft auf die Ventilkörpereinrichtung (34-1, 34-2) entgegen der jeweiligen Schaltrichtung (38-1, 38-2) ausgeübt wird, wobei sich eine Differenz aus der Summe aller ersten Wirkflächenabschnitte (62-1) der ersten Ventilkörpereinrichtung (34-1) und der Summe aller zweiten Wirkflächenabschnitte (62-2) der ersten Ventilkörpereinrichtung (34-1) und
eine Differenz aus der Summe aller ersten Wirkflächenabschnitte (62-2) der zweiten Ventilkörpereinrichtung (34-2) und der Summe aller zweiten Wirkflächenabschnitte (64-2) der zweiten Ventilkörpereinrichtung (34-2) betragsmäßig um maximal 10%, vorzugsweise maximal 5%, weiter vorzugsweise maximal 1%, voneinander unterscheiden, vorzugsweise identisch sind.

3. Belüftungsventil (10) nach einem der vorherigen Ansprüche, wobei jeder Ventilkörpereinrichtung (34-1, 34-2), insbesondere jedem Ventilkörper (36-1, 36-2), wenigstens eine eigene Strömungsöffnung (32-1, 32-2) zwischen Unterdruckseite (12) und Belüftungsseite (14) zugeordnet ist, wobei die Ventilkörpereinrichtungen (34-1, 34-2) in der jeweiligen Schließstellung mit einem jeweiligen Ventilsitz (42-1, 42-2) zusammenwirken, um die wenigstens eine zugeordnete Strömungsöffnung (32-1, 32-2) dichtend zu verschließen.

4. Belüftungsventil (10) nach dem vorherigen Anspruch, wobei sich die Ventilkörpereinrichtungen (34-1, 34-2), insbesondere die Ventilkörper (36-1, 36-2), durch die ihnen zugeordnete wenigstens eine Strömungsöffnung (32-1, 32-2) hindurch erstrecken, sodass zumindest in einer geöffneten Stellung der Ventilkörpereinrichtung (34-1, 34-2) ein Belüftungsspalt (48-1, 48-2) zwischen der jeweiligen Ventilkörpereinrichtung (34-1, 34-2) und einer die Strömungsöffnung (32-1, 32-2) begrenzenden Wandung gebildet ist.

5. Belüftungsventil (10) nach einem der vorherigen Ansprüche, wobei die Unterdruckseite (12) und die Belüftungsseite (14) durch eine Wandung (22) voneinander getrennt sind, wobei in der Wandung (22) wenigstens eine erste Strömungsöffnung (32-1) ausgebildet ist, durch welche sich der wenigstens eine erste Ventilkörper (36-1) erstreckt, und wobei in der Wandung (22) wenigstens eine zweite Strömungsöffnung (32-2) ausgebildet ist, durch welche sich der wenigstens eine zweite Ventilkörper (36-2) erstreckt, insbesondere wobei die Wandung (22) einen jeweiligen Ventilsitz (42-1, 42-2) für die Ventilkörpereinrichtungen (34-1, 34-2) bildet.

6. Belüftungsventil (10) nach einem der vorherigen Ansprüche, wobei die Ventilkörpereinrichtungen (34-1, 34-2) derart ausgebildet sind, insbesondere die Ventilkörper (36-1, 36-2) derart geformt sind, dass bei einer jeweiligen Verstellbewegung Ventilkörpereinrichtungen (34-1, 34-2) in Schaltrichtung (38-1, 38-2), sich ein Strömungsquerschnitt für Strömungen von der Belüftungsseite (14) zu der Unterdruckseite (12), insbesondere die Größe eines zwischen Ventilkörpereinrichtung (34-1, 34-2) und Ventilsitz (42-1, 42-2) gebildeten Belüftungsspalts (48-1, 48-2), nicht-linear verändert, insbesondere progressiv zunimmt.

7. Belüftungsventil (10) nach einem der vorherigen Ansprüche, wobei sich die Ventilkörper (36-1, 36-2) in einer Richtung entgegen der jeweiligen Schaltrichtung (38-1, 38-2) verjüngen, insbesondere trichterförmig oder kelchförmig.

8. Belüftungsventil (10) nach einem der vorherigen Ansprüche, wobei der Ventilmechanismus (16) derart ausgebildet ist, dass die erste Schaltrichtung (38-1) und die zweite Schaltrichtung (38-2) entgegensetzt orientiert sind, insbesondere wobei die Schaltrichtungen (38-1, 38-2) parallel zu einer Hauptströmungsrichtung von der Belüftungsseite (14) zu der Unterdruckseite (12) orientiert sind.

9. Belüftungsventil (10) nach dem vorherigen Anspruch, wobei die erste Ventilkörpereinrichtung (34-1) und die zweite Ventilkörpereinrichtung (34-2) über ein drehbar gelagertes Kopplungselement (52), insbesondere Kopplungsstange, weiter insbesondere Wippe, miteinander bewegungsgekoppelt sind.

10. Belüftungsventil (10) nach einem der Ansprüche 8 oder 9, wobei der Ventilmechanismus derart ausgebildet ist, insbesondere eine geometrische Anordnung der Ventilkörpereinrichtungen (34-1, 34-2) und des Kopplungselements (52) derart ausgeführt ist, dass bei Überführung der Ventilkörpereinrichtungen (34-1, 34-2) in die Schließstellung eine der beiden Ventilkörpereinrichtungen (34-1, 34-2) ihre Schließstellung vor der anderen erreicht, insbesondere diejenige Ventilkörpereinrichtung, deren Schaltrichtung von der Belüftungsseite (14) zu der Unterdruckseite (12) weist.

11. Belüftungsventil (10) nach einem der Ansprüche 1 bis 7, wobei der Ventilmechanismus (18) derart ausgebildet ist, dass die erste Schaltrichtung (38-1) und die zweite Schaltrichtung (38-2) zueinander parallel orientiert oder identisch sind, insbesondere wobei die Schaltrichtungen (38-1, 38-2) schräg, weiter insbesondere orthogonal, zu einer Hauptströmungsrichtung von der Belüftungsseite (14) zu der Unterdruckseite (12) orientiert sind.

12. Belüftungsventil (10) nach dem vorherigen Anspruch, wobei die erste Ventilkörpereinrichtung (34-1) und die zweite Ventilkörpereinrichtung (34-2) über ein Verbindungselement (66) miteinander starr verbunden oder durch unterschiedliche Abschnitte eines gemeinsamen Ventilkörpers gebildet sind.

13. Schlauchheber (100), umfassend
- einen Hubschlauch (102) mit einem Schlauchinnenraum, wobei der Hubschlauch (102) durch Beaufschlagung des Schlauchinnenraums mit Unterdruck verkürzbar und durch Belüften des Schlauchinnenraums wieder verlängerbar ist;
- ein Belüftungsventil (10) nach einem der vorherigen Ansprüche, wobei die Unterdruckseite (12) des Belüftungsventils (10) mit dem Schlauchinnenraum des Hubschlauchs (102) strömungsverbunden ist.

14. Schlauchheber (100) nach dem vorherigen Anspruch, außerdem umfassend einen Bedienmechanismus (130) zum Betätigen des Belüftungsventils (10), insbesondere zum Verstellen der Ventilkörpereinrichtungen (34-1, 34-2) entlang der jeweiligen Schaltrichtung (38-1, 38-2).

15. Schlauchheber nach Anspruch 13 oder 14, außerdem umfassend eine Bedienvorrichtung (108) mit einem, insbesondere einhändig umgreifbaren, Bediengriff (118) zum Bedienen des Schlauchhebers (100), wobei die Bedienvorrichtung (108) an einem Ende des Hubschlauchs (102) angeordnet ist und insbesondere eine Endeffektor-Kupplung (114) zum Ankoppeln eines Endeffektors (112) aufweist, wobei das Belüftungsventil (10) und insbesondere der Bedienmechanismus (130) an der Bedienvorrichtung (108) angeordnet sind.

16. Schlauchheber (100) nach dem vorherigen Anspruch, wobei der Bedienmechanismus (130) ein erstes Bedienelement (132) und ein zweites Bedienelement (134) umfasst, welche manuell verstellbar an der Bedienvorrichtung (108) angeordnet sind, wobei die Bedienelemente (132, 134) über eine, insbesondere an einer der Ventilkörpereinrichtungen (34-1, 34-2) angreifenden, Kopplungseinrichtung (136) mit dem Belüftungsventil (10) mechanisch derart gekoppelt sind, dass die Ventilkörpereinrichtungen (34-1, 34-2) durch Verstellen des ersten Bedienelements (132) in einer ersten Betätigungsrichtung (138) in die Offenstellung überführbar sind und durch Verstellen des zweiten Bedienelements (134) in einer zweiten Betätigungsrichtung (140) in die Schließstellung überführbar sind.

17. Bedienvorrichtung (108) für einen Schlauchheber (100), umfassend
- einen Hubschlauchanschluss (122);
- eine Endeffektor-Kupplung (114) zur Ankopplung des Endeffektors (112) an die Bedienvorrichtung (108);
- ein Belüftungsventil (10) nach einem der Ansprüche 1 bis 12,
- einen Bedienmechanismus (130) zum Betätigen des Belüftungsventils (10).

18. Belüftungsventil (10) für einen Schlauchheber (100), umfassend
- eine Unterdruckseite (12),
- eine, insbesondere mit der Atmosphäre verbundene, Belüftungsseite (14),
- einen Ventilmechanismus (16) zum Freigeben und Absperren einer Strömungsverbindung zwischen der Unterdruckseite (12) und der Belüftungsseite (14), **dadurch gekennzeichnet, dass** der Ventilmechanismus (16) eine erste Ventilkörpereinrichtung (34-1) mit wenigstens einem ersten Ventilkörper (36-1) und
eine zweite Ventilkörpereinrichtung (34-2) mit wenigstens einem zweiten Ventilkörper (36-2) aufweist, wobei die erste Ventilkörpereinrichtung (34-1) in einer ersten Schaltrichtung (38-1) ausgehend von einer Schließstellung in eine Offenstellung verstellbar ist, wobei die zweite Ventilkörpereinrichtungen (34-2) in einer zweiten Schaltrichtung (38-2) ausgehend von einer Schließstellung in eine Offenstellung verstellbar ist, wobei die Ventilkörpereinrichtungen (34-1, 34-2) miteinander derart bewegungsgekoppelt sind, dass bei einer Bewegung der ersten Ventilkörpereinrichtung (34-1) in der ersten Schaltrichtung (38-1) die zweite Ventilkörpereinrichtung (34-2) in der zweiten Schaltrichtung (38-2) mitbewegt wird und umgekehrt, wobei der Ventilmechanismus (16) derart ausgebildet ist, dass bei Vorliegen eines Druckunterschieds zwischen der Unterdruckseite (12) und der Belüftungsseite (14) die erste Ventilkörpereinrichtung (34-1) in der ersten Schaltrichtung (38-1) und die zweite Ventilkörpereinrichtung (34-2) entgegen der zweiten Schaltrichtung (38-2) derart beaufschlagt werden, dass die Ventilkörpereinrichtungen (34-1, 34-2) in Folge der Bewegungskopplung in ihrer momentanen Position verbleiben.
